# DEMANDE DE BREVET EUROPEEN

(11) **EP 1 693 275 A2**
(43) Date de publication de la demande: **23.08.2006**
(21) Numéro de dépôt: 06110057.4
(22) Date de dépôt: 16.02.2006
(51) Int. Cl.: B62B 7/08

(54) **Poussette pour enfant, à pliage parapluie.**

(30) Priorité: 16.02.2005 FR 0501590; 13.07.2005 FR 0507564
(71) Demandeur: DOREL FRANCE SA, 49309 Cholet Cedex (FR)
(72) Inventeur: Ageneau, Laurent, 44210 Pornic (FR)
(74) Mandataire: Larcher, Dominique

(57) **Abrégé**

L'invention concerne une poussette pour enfant comprenant au moins trois blocs d'au moins une roue, montés chacun à une première extrémité (111,121,131,141) d'un bras (11,12,13,14) dont la seconde extrémité est montée articulée et coulissante le long d'une poutre principale (1). Les bras (11,12,13,14) sont guidés par au moins une bichette entre une position pliée, dans laquelle ils forment un angle réduit avec la poutre (1), et une position dépliée, dans laquelle les bras forment un angle supérieur à l'angle réduit.
La poussette comprend au moins un élément coulissant (42) monté sur la poutre (1), auquel est solidarisée au moins une des biellettes, et selon l'invention des moyens de suspension (43), solidaires de la poutre (1) et agissant sur au moins un des éléments coulissants (42).

## Description

### 1. Domaine de l'invention

Le domaine de l'invention est celui de la puériculture. Plus précisément, l'invention concerne les voitures d'enfant, et en particulier les mécanismes de pliage pour de telles voitures d'enfant. Plus précisément encore, l'invention concerne les poussettes à pliage de type parapluie.

### 2. L'art antérieur

On connaît déjà de très nombreuses techniques de pliage de châssis de poussette. D'une façon générale, on cherche notamment à concilier au moins certains des objectifs suivants :
- efficacité du pliage, l'encombrement de la poussette pliée devant être le plus réduit possible, de façon à faciliter son rangement, et son transport, par exemple dans un véhicule automobile ;
- simplicité des manipulations de pliage et dépliage, l'utilisateur devant pouvoir effectuer ces opérations avec un nombre réduit d'opérations, et chacune de ces opérations devant être le plus facile possible ;
- sécurité de l'enfant transporté et notamment contrôle du pliage (pour lutter contre un pliage non souhaité, en particulier en présence d'un enfant) ;
- simplicité et faible coût de la fabrication.

Il est en outre nécessaire, bien sûr, qu'en position dépliée, la poussette soit confortable et sûre pour l'enfant.

Parmi les différents types de châssis connus, une technique consiste à articuler les piétements avant et arrière de la poussette sur une poutre principale. En faisant coulisser ces piétements le long de la poutre principale, on déploie les piétements de sorte que ces derniers passent d'une position pliée, où ils sont proches de la poutre à une position dépliée où ils forment un angle plus important par rapport à la poutre principale.

Cette technique, appelée poussette à pliage parapluie (du fait qu'elle s'inspire du principe du parapluie), est notamment présentée dans le document de brevet **US 3,936,069.** Cette poussette comprend une poutre principale sensiblement verticale dont l'extrémité supérieure est solidaire d'un guidon et l'extrémité inférieure porte un élément d'articulation, sur lequel sont articulés des piétements. Une structure rigide conçue pour supporter l'enfant, et portant les articulations, coulisse le long de la poutre principale. Cette technique permet donc le déploiement des piétements lorsque la structure coulisse le long de la poutre principale, jusqu'à ce que les éléments d'articulation viennent en butée contre l'extrémité inférieure de la structure rigide. Le pliage des piétements est obtenu par la manipulation inverse de la poutre.

Cette technique de pliage, relativement ancienne, a connu peu de succès, pour différentes raisons, et notamment le confort de l'enfant.

En effet, les poussettes sont actuellement prévues pour des usages variés (déplacement en ville, en forêt, en campagne...), et doivent être adaptées aux différents types de terrains. Notamment, le confort et la sécurité de l'enfant transporté ne s'avèrent pas optimaux lorsque le terrain est dégradé ou présente des trous et des bosses. En effet, ces poussettes ne possèdent pas de moyens d'amortissement ou de suspension.

Par ailleurs, la poutre principale conçue pour supporter l'enfant induit un encombrement relativement important sur la hauteur, ce qui va à l'encontre des attentes des utilisateurs, qui souhaitent obtenir une bonne compacité de la poussette en position pliée.

### 3. Objectifs de l'invention

L'invention a notamment pour objectif de pallier ces inconvénients de l'art antérieur.

Plus précisément, un objectif de l'invention est de fournir une telle poussette, présentant de bonnes qualités de confort et de sécurité, tant pour l'enfant transporté que pour la personne poussant la poussette.

Ainsi, notamment, un objectif de l'invention est de fournir une telle poussette capable d'amortir et/ou réduire les chocs, en particulier lorsque le terrain est plus ou moins « mouvementé » ou dégradé.

Un autre objectif de l'invention est de fournir une telle poussette, avec un châssis pliant, qui offre une bonne compacité en position pliée, permettant notamment un transport et un rangement aisés.

Encore un autre objectif de l'invention est de fournir une telle poussette, dont le pliage et le dépliage sont simples et ergonomiques.

L'invention a également pour objectif de fournir une telle poussette, qui soit simple et peu coûteuse à réaliser et à monter.

### 4. Caractéristiques essentielles de l'invention

Ces objectifs, ainsi que d'autres qui apparaîtront plus clairement par la suite, sont atteints à l'aide d'une poussette pour enfant comprenant au moins trois blocs d'au moins une roue, montés chacun à une première extrémité d'un bras dont la seconde extrémité est montée articulée et coulissante le long d'une poutre principale, lesdits bras étant guidés par au moins une biellette entre une position pliée, dans laquelle ils forment un angle réduit avec ladite poutre, et une position dépliée, dans laquelle lesdits bras forment un angle supérieur audit angle réduit. Selon l'invention, la poussette comprend au moins un élément coulissant monté sur ladite poutre, auquel est solidarisée au moins une desdites biellettes, et des moyens de suspension, solidaires de ladite poutre et agissant sur au moins un desdits éléments coulissants.

On obtient ainsi une poussette efficace, en pliage et en dépliage de bras, basée sur une approche tout à fait nouvelle du mécanisme d'entraînement et de synchronisation des biellettes.

L'invention propose donc un système de suspension à débattement le long de la poutre principale. On obtient ainsi une poussette plus confortable, et notamment plus sûre, du fait qu'elle atténue efficacement, les secousses intempestives dues à des défauts de terrain.

Dans un mode de réalisation préférentiel de l'invention, lesdits moyens de suspension comprennent un ressort à boudin monté sur ladite poutre principale.

Avantageusement, une première extrémité dudit ressort à boudin est solidaire d'un desdits éléments coulissants.

Préférentiellement, une seconde extrémité dudit ressort à boudin est libre.

Selon un aspect avantageux de l'invention, au moins une première desdites biellettes est solidaire d'un élément coulissant et au moins une seconde desdites biellettes est solidaire d'une pièce fixe montée à l'extrémité inférieure de ladite poutre.

De façon préférentielle, chaque biellette associée à une roue arrière est une première biellette et chaque biellette associée à une roue avant est une seconde biellette.

Avantageusement, la poussette comprend des moyens de verrouillage en position déployée, comprenant un doigt de verrouillage coopérant avec une ouverture ménagée dans ladite poutre.

Dans un mode de réalisation préférentiel de l'invention, ladite ouverture est une fente permettant un léger déplacement le long de ladite poutre.

De façon avantageuse, ladite poutre principale est pliable, pour réduire son encombrement dans ladite position dépliée.

De façon préférentielle, ladite poutre principale est formée d'un premier élément présentant des moyens de guidage en coulissement d'un second élément correspondant dans ou au voisinage dudit premier élément.

De façon avantageuse, la poussette comprend un support d'assise formant liaison entre lesdits moyens de verrouillage et un support coulissant desdits bras.

Préférentiellement, la poussette comprend des moyens de commande desdits premiers moyens de verrouillage, montés sur ladite poutre.

Selon un aspect avantageux de l'invention, ledit support d'assise est formé de deux éléments montés articulés sur ledit support coulissant de façon que, lorsqu'ils s'étendent en dessous dudit support coulissant, ils s'opposent à l'ouverture d'un hamac.

Dans un mode de réalisation préférentiel de l'invention, la poussette comprend un support de hamac formé de deux longerons formés chacun de deux tubes coulissants l'un dans ou par rapport à l'autre.

Préférentiellement, au moins un desdits tubes coulissants est guidé en coulissement par une biellette.

Avantageusement, la poussette comprend un repose-pied formé de deux palettes articulées.

De façon préférentielle, le déploiement et/ou le repli dudit repose-pieds est contrôlé par au moins un câble et/ou au moins une biellette.

Selon un aspect avantageux de l'invention, au moins une desdites palettes porte au moins un élément d'appui, permettant le maintien en position debout de ladite poussette, en position pliée.

Préférentiellement, chacune desdites palettes porte un élément d'appui, ces éléments d'appui étant montés de façon que, lorsqu'ils sont en appui contre le sol, ils s'opposent au déploiement de la poussette.

De façon avantageuse, ladite poutre principale porte, à son extrémité supérieure, des moyens de guidage de ladite poussette, articulés par rapport à ladite poutre principale.

Avantageusement, lesdits moyens de guidage comprennent des deuxièmes moyens de verrouillage montés articulés sur ladite poutre principale de façon que, dans une position déverrouillée, ils autorisent la rotation desdits moyens de guidage autour d'un axe perpendiculaire à ladite poutre principale.

Préférentiellement, lesdits moyens de guidage comprennent des troisièmes moyens de verrouillage mettant en oeuvre un mécanisme de crabot dont une partie est solidaire de la poutre principale et une autre partie est solidaire des moyens de guidage.

Selon un mode de réalisation préférentiel de l'invention, les troisièmes moyens de verrouillage coopèrent avec les deuxièmes moyens de verrouillage pour immobiliser les moyens de guidage par rapport à la poutre principale.

L'invention concerne également un châssis de poussette pour enfant telle que décrit ci-dessus.

### 5. Liste des figures

D'autres caractéristiques et avantages de l'invention apparaîtront plus clairement à la lecture de la description suivante d'un mode de réalisation préférentiel de l'invention, donné à titre de simple exemple illustratif et non limitatif, et des dessins annexés, parmi lesquels :
- la figure 1 illustre, vue de derrière, une poussette selon l'invention, en position pliée ;
- la figure 2 illustre la poussette de la figure 1, en position dépliée ;
- la figure 3 illustre de façon plus détaillée le mécanisme d'entraînement et de synchronisation de la poussette de la figure 2 ;
- la figure 4 illustre la poignée de commande du mécanisme d'entraînement et de synchronisation de la figure 3 ;
- la figure 5 illustre de façon plus détaillée le guidon de la poussette selon l'invention ;
- la figure 6 illustre de façon plus détaillée le repose-pied de la poussette selon l'invention ;
- les figures 7A et 7B illustrent, respectivement, une poussette selon l'invention, en position pliée et dépliée ;
- la figure 8 illustre de façon plus détaillée la structure d'articulation selon l'invention ;
- la figure 9 illustre de façon plus détaillée la pièce charnière selon l'invention ;
- la figure 10 illustre de façon plus détaillée le guidon de la poussette des figures 7A et 7B ; et
- les figures 11A et 11B sont des vues schématiques présentant, vue de devant, la cinématique d'une poussette, selon une variante de mise en oeuvre :

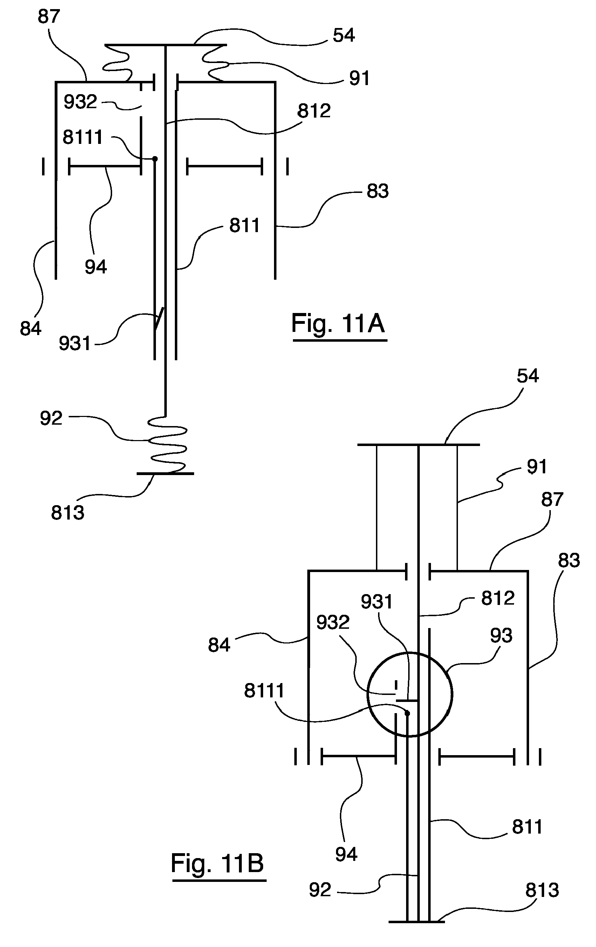

   - figure 11A : en position pliée ;
   - figure 11B : en position dépliée.

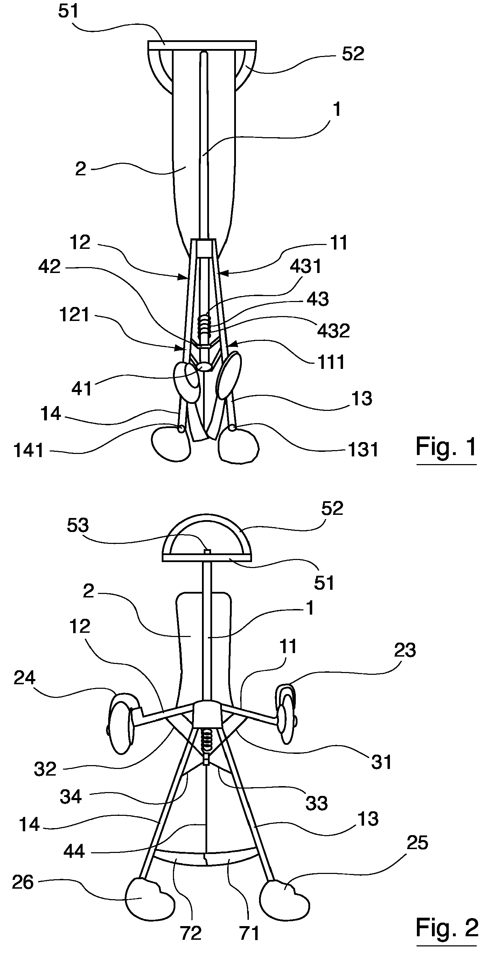

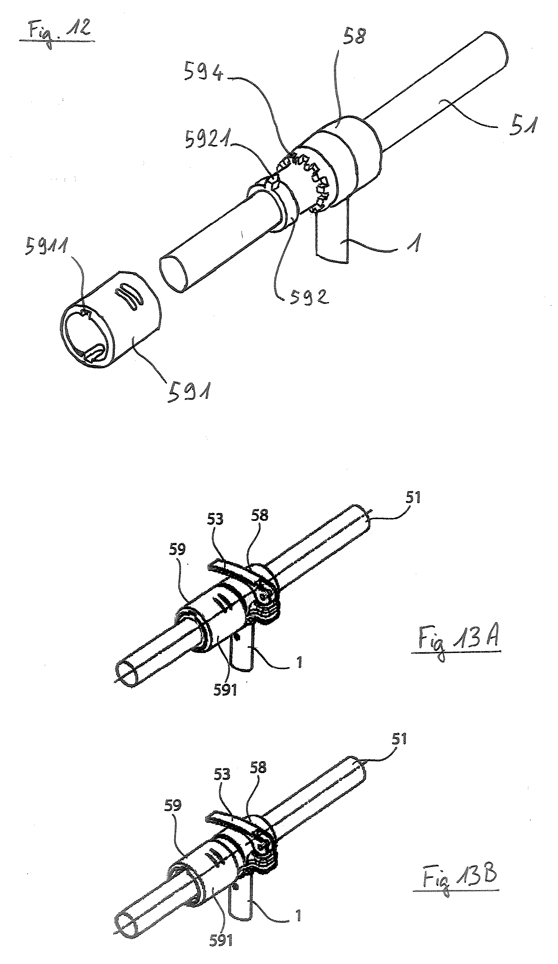

- la figure 12 illustre une variante de mise en oeuvre du mécanisme de contrôle de l'inclinaison du guidon de la poussette de la figure 1, mettant en oeuvre un mécanisme de crabot ;
- les figures 13A et 13B illustrent une autre variante de mise en oeuvre du mécanisme de contrôle de l'inclinaison du guidon de la poussette de la figure 1, associant un crabot et une came :
   - figure 13A : mécanisme avec crabot en position verrouillée;
   - figure 13B : mécanisme avec crabot en position déverrouillée.

### 6. Description d'un mode de réalisation de l'invention

L'invention concerne donc une amélioration des poussettes à pliage parapluie.

Selon l'invention, l'entraînement des piètements avant et arrière n'est pas mis en oeuvre par un élément unique, comme cela est le cas dans les poussettes connues de ce type (et, par analogie, dans les parapluies), mais par deux éléments distincts, montés sur une poutre principale. Avantageusement, un ressort de suspension est prévu.

Ainsi, un ressort peut notamment être utilisé comme suspension centrale. On obtient ainsi une poussette avec une efficacité plus grande, alliant confort et sécurité de l'enfant transporté, même en cas de défauts de revêtements.

Le premier mode de réalisation décrit à titre d'exemple, et illustré par les figures 1 à 3, concerne une voiture d'enfant à châssis pliant de type dit « parapluie », équipé d'une poutre principale 1, sur laquelle est montée coulissante une structure de support rigide 2, par exemple en matière plastique, destinée notamment à recevoir un hamac.

Cette structure rigide 2 peut notamment être obtenue, au moins en partie, par moulage, avec le cas échéant usinage de certaines portions.

L'invention ne se limite cependant pas à de telles structures, dont l'encombrement en hauteur est constant. Ainsi, comme on le verra par la suite, dans un second mode de réalisation, on prévoit de remplacer la structure rigide 2 par un ou plusieurs ensembles d'éléments coulissants.

Dans le mode de réalisation illustré, le châssis comprend deux bras avant (aussi appelés piètements avant) 13 et 14 et deux bras arrière 11 et 12 (aussi appelés piètements arrière), dont les extrémités inférieures 131, 141, 111 et 121 portent respectivement les blocs de roue 25, 26, 23 et 24. Chaque bloc porte par exemple une ou deux roues.

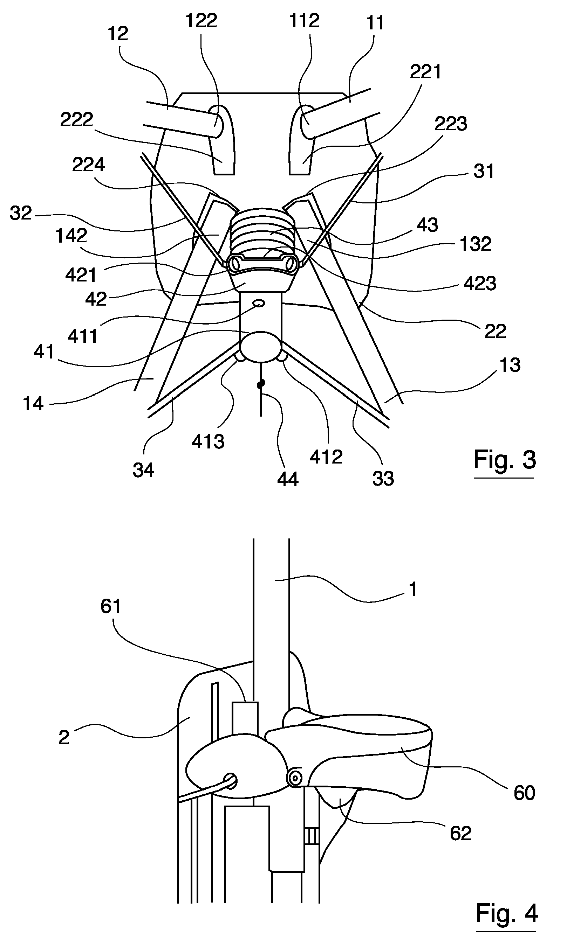

Les extrémités supérieures 132, 142, 112 et 122 sont montées en liaison pivot avec la partie inférieure 22 de la structure rigide 2, à l'aide, par exemple, de vis épaulées contrôlant le serrage des pièces. Comme illustré par la **figure 3,** chaque extrémité supérieure vient partiellement se loger, pour y être solidarisée, dans une chambre 221, 222, 223 et 224 prévue à cet effet dans la structure rigide 2.

Les bras 11, 12, 13 et 14 sont prévus pour être solidarisés, au voisinage de leurs extrémités supérieures, à des biellettes 31, 32, 33 et 34. Ces dernières guident les bras, depuis une position pliée vers une position dépliée, et inversement.

Ainsi, comme illustré par la **figure 1,** dans la position pliée, les bras forment un angle réduit par rapport à la poutre principale, et dans la position dépliée illustrée par la **figure 2,** les bras forment un angle supérieur à cet angle réduit. En d'autres termes, dans la position pliée, les bras sont sensiblement parallèles entre eux, tandis que, dans la position dépliée, les bras sont divergents les uns par rapport aux autres, de façon à placer les blocs de roue aux quatre angles d'un parallélogramme définissant sensiblement l'encombrement au sol de la poussette. En d'autres termes, l'angle formé par une biellette et la poutre est plus grand en position dépliée qu'en position pliée.

Selon l'invention, les biellettes 33 et 34, associées aux bras avant, sont solidarisées, mobiles en rotation, à un premier élément d'articulation 41, et les biellettes 31 et 32, associées aux bras arrière, sont solidarisées, mobiles en rotation, à un second élément d'articulation 42.

Cette dissociation du premier et du second éléments d'articulation est un aspect important de la mise en oeuvre de l'invention.

Selon le présent mode de réalisation de l'invention, le premier élément d'articulation 41 est fixé à l'extrémité inférieure de la poutre principale 1, par exemple, par l'intermédiaire d'une vis 411 ou par emboîtement. Ce premier élément d'articulation 41 comprend deux oreilles 412 et 413, de formes identiques, orientées vers la face avant de la poussette. Chacune des oreilles présente un trou, en son centre, prévu pour recevoir une biellette. Les oreilles 412 et 413 sont divergentes l'une par rapport à l'autre, de sorte que les biellettes 33 et 34 forment un « V » dont la base est très ouverte.

Le premier élément d'articulation 41 comprend en outre un élément d'accrochage (non représentée), par exemple une oreille ou une barre s'étalant transversalement entre les oreilles 412 et 413, conçue pour accrocher un câble d'entraînement 44 du repose-pied 7 de la poussette.

Le repose-pied 7 est formé de deux parties, ou palettes, 71 et 72 pivotantes l'une par rapport à l'autre. Avantageusement, ces deux palettes sont identiques, ce qui simplifie la fabrication. Selon un aspect particulier de l'invention, on prévoit donc une commande de ce repose-pied, basée sur l'utilisation d'un fil métallique 44, monté suspendu à l'extrémité du premier élément d'articulation 41. On obtient ainsi un mécanisme d'entraînement du repose-pied simple, efficace, peu coûteux et surtout peu encombrant. Ce fil peut être remplacé par un mécanisme à biellette(s).

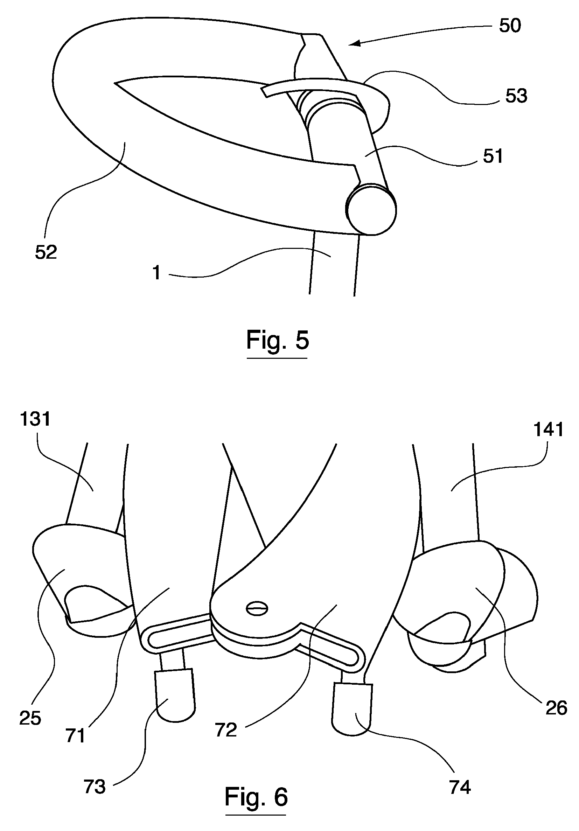

Comme illustré par la **figure 6,** deux butées 73 et 74, par exemple en matière plastique, sont prévues pour être solidarisées sur la face inférieure du repose-pied. Ces butées peuvent prendre deux positions : une position passive, obtenue à l'ouverture du repose-pied 7, dans laquelle les butées sont disposées croisées l'une sur l'autre, et une position active, dans laquelle les butées s'étendent sensiblement dans le prolongement de chaque palette 71 et 72 du repose-pied. On obtient ainsi une poussette avec de moyens de stabilisation escamotable formant, dans la position pliée, des points d'appui qui permettent de soutenir la poussette dans une position verticale stable.

Une telle poussette selon l'invention est donc particulièrement bien adaptée pour des rangements dans des espaces réduits et un stockage en position verticale. Il est à noter que dans la position active (butées en appui au sol), chaque butée, venant en contact avec le sol, exerce une force opposée à la force d'ouverture de chaque palette du repose-pied. En d'autres termes, les butées s'opposent à l'ouverture du repose-pied et donc au dépliage de la poussette.

De façon avantageuse, les palettes 71 et 72 peuvent être configurées pour que leurs portions inférieures, en position pliée, assurent la fonction d'appui au sol, de façon à s'affranchir de la présence des butées.

Il est à noter que cette approche peut aisément être adaptée à d'autres poussettes à pliage en trois dimensions.

On note que, selon un autre mode de réalisation envisageable, le premier élément d'articulation 41 pourrait être monté coulissant le long de la poutre principale 1. Dans ce cas, un autre élément d'extrémité, par exemple un bouchon, est ajouté. En outre, il est également possible de prévoir deux pièces distinctes, une pièce pour les oreilles recevant les biellettes et une autre pour l'élément supportant la commande du repose-pied.

Le second élément d'articulation 42 est situé au-dessus du premier élément 41, et monté coulissant le long de la poutre principale 1. Le second élément d'articulation 42 comprend deux oreilles 421 et 422, de forme identique, orientées vers la face arrière de la poussette. Chacune des oreilles présente un trou, en son centre, prévu pour recevoir une biellette. Les oreilles 421 et 422 sont divergentes l'une par rapport à l'autre, de sorte que les biellettes 31 et 32 forment un « V » dont la base est sensiblement identique à celle formée par les biellettes 33 et 34.

Il est à noter que le couple de biellettes avant 33 et 34 et le couple de biellettes arrière 31 et 32 peuvent présenter des ouvertures de « V » différentes. Cependant, dans un mode de réalisation particulier, on cherche à avoir des ouvertures de « V » sensiblement identiques, pour assurer une meilleure stabilité au sol de la poussette. En effet, dans ce cas, les blocs de roue sont placés aux quatre angles d'un « rectangle » définissant sensiblement l'encombrement au sol de la poussette.

Selon le mode de réalisation illustré par la **figure 3,** le second élément d'articulation 42 présente à son extrémité supérieure une gaine 423, dans laquelle vient se clipper l'extrémité inférieure 431 d'un ressort de suspension 43. Cet ensemble est coulissant le long de la poutre principale 1.

En position dépliée, l'extrémité supérieure 432 du ressort de suspension 43 vient en butée contre l'extrémité inférieure 22 de la structure rigide 2. Dans cette position, le ressort peut être comprimé de façon qu'il assure simultanément une fonction de suspension centrale et une fonction de compression des éléments d'articulation 41 et 42.

Il est à noter que dans un autre mode de réalisation envisageable, le ressort de suspension 43 peut être solidarisé à l'extrémité inférieure 22 de la structure rigide 2. En outre, il est également concevable d'envisager sans sortir du cadre de l'invention, d'avoir un ressort de suspension monté coulissant entre le premier élément d'articulation 41 et le second élément d'articulation 42. Il est aussi concevable de mettre en oeuvre d'autres ressorts de suspension et/ou de torsion situés à différentes positions le long de la poutre principale 1, notamment entre l'extrémité inférieure de la poutre principale 1 et le premier élément d'articulation 41, ou encore au voisinage de l'extrémité supérieure de la poutre principale 1.

La poutre principale 1 de l'invention est équipée, à son extrémité supérieure, d'un guidon 50 ajustable en inclinaison. Le guidon 50 est formé par une barre de guidage 51, s'étendant perpendiculairement à l'axe défini par la longueur de la poutre principale 1, et un bras poussoir 52, en forme générale de « U », solidarisé aux extrémités de la barre 51. La barre 51 est solidarisée, mobile en rotation, à l'extrémité supérieure de la poutre principale 1, au moyen d'une pièce de raccord 58.

En référence à la **figure 5,** le guidon est avantageusement équipé d'une came ou patte 53 de contrôle de l'inclinaison du bras poussoir 52. En actionnant la patte 53 de contrôle, on libère la rotation de la barre 51. Ainsi, l'utilisateur peut aisément tourner le bras poussoir 52 autour d'un axe défini par la longueur de la barre 51, jusqu'à obtenir une inclinaison du bras poussoir 52 adaptée à sa taille, son confort d'utilisation, etc. En d'autres termes, le bras poussoir 52 peut être orienté vers l'avant, l'arrière, le bas ou encore le haut de la poussette.

Bien entendu des variantes de l'invention peuvent être envisagées, par exemple sur les modes de réalisation et de mise en oeuvre du mécanisme de contrôle de l'inclinaison du guidon. Notamment la patte 53 (aussi appelée par la suite came) peut être remplacée ou complétée par un mécanisme de crabot.

La figure 12 illustre ce mécanisme de crabot appliqué à une poussette selon l'invention. Les figures 13A et 13B illustrent ce mécanisme associé à un mécanisme de came tel que décrit plus haut.

Une pièce de raccord 58 est solidaire de l'extrémité de la poutre principale 1. Cette pièce de raccord 58 comporte une denture périphérique extérieure 594. La barre 51, sur laquelle est fixée le bras poussoir 52, est montée pivotante dans cette pièce de raccord 58. Cette barre comporte un épaulement 592 sur lequel est formé un ergot 5921.

Une bague de préemption 591, représentée séparément sur la figure 12, est montée coulissante le long de la barre 51. L'intérieur de cette bague comprend une rainure 5911 destinée à coopérer avec l'ergot 5921, de façon à ce que la bague 591 ne puisse pas tourner autour de la barre 51. Cette bague 591 comporte également une denture périphérique (non représentée) complémentaire de la denture périphérique extérieure 594 de la pièce de raccord 58.

La figure 13A représente un mécanisme de crabot dans lequel la bague 591 est placée contre la pièce de raccord 58. Dans cette position, la denture périphérique de la bague 591 vient en prise avec la denture périphérique extérieure 594 de la pièce de raccord 58. La barre 51 est alors immobilisée en rotation par rapport à la pièce de raccord 58. Un ressort placé sous la bague 591 et venant en appui sur l'épaulement 592 tend à maintenir la bague 591 dans cette position.

En revanche, en éloignant légèrement la bague 591 de la pièce de raccord 58, l'utilisateur peut libérer la rotation de la barre 51, de façon à régler l'inclinaison du guidon. Cette position de la bague 591 éloignée la bague 591 de la pièce de raccord 58 est représentée sur la figure 13B.

Les inventeurs ont constaté que l'utilisation d'une came ou d'un crabot seul pouvait être insuffisante dans certaines situations.

En effet, il n'est pas exclu que l'utilisateur actionne involontairement la came 53 présente sur le guidon et libère immédiatement la rotation du bras poussoir 52.

On peut alors utiliser la poussette dans une situation à sécurité réduite, le guidon ne permettant plus une conduite contrôlée de la poussette.

Par ailleurs, l'accouplement entre le crabot et la pièce de raccord s'effectue au moyen de dents d'engrenage qui, en fonction de leurs tolérances de fabrication, induisent des jeux pouvant être préjudiciables à l'ergonomie et/ou au confort d'utilisation.

Ainsi, on peut prévoir d'associer une came et un crabot de façon à cumuler les avantages de chacun de ces mécanismes et de compenser leurs inconvénients.

Les figures 13A et 13B illustrent respectivement un mécanisme de contrôle hybride (came plus crabot) en position verrouillée (figure 13A), dans laquelle la came 53 est rabattue vers la barre 51 et la bague 591 du crabot est apparié à la pièce de raccord 58, et en position partiellement déverrouillée (figure 13B), dans laquelle la came reste verrouillée le crabot 59 est éloigné de la pièce de raccord 58. Bien entendu, il suffit alors à l'utilisateur de tirer sur la came 53 pour déverrouiller totalement le guidon.

On obtient ainsi un mécanisme de contrôle plus sûr, du fait que l'utilisateur doit engager une action de déverrouillage claire pour libérer la rotation du guidon (c'est-à-dire qu'il doit actionner la came d'une part et désengager le crabot de la pièce de raccord d'autre part), et plus confortable, en ce sens que dans la position verrouillée la came et le crabot sont comprimés l'un contre l'autre de façon à éliminer les jeux entre les dentures. En d'autres termes, on réduit les vibrations intempestives au niveau du guidon lors de l'utilisation de la poussette.Comme illustré par la **figure 1,** en position pliée, le bras poussoir 52 est complètement replié vers l'avant de la poussette, de façon à obtenir une meilleure compacité.

Toujours dans le but d'améliorer l'ergonomie et de simplifier les manipulations nécessaires au pliage/dépliage de la poussette, selon un aspect particulier de l'invention, la poussette est équipée d'une gâchette 60, permettant de commander des moyens de verrouillage (non représentés) de la poutre principale 1.

Comme illustré par la **figure 4,** la gâchette 60 est située au voisinage de la partie supérieure 21 de la structure rigide 2. La gâchette 60 est conçue et montée sur la structure rigide 2 de façon à définir un logement 61, dans lequel circule la poutre principale 1. Avantageusement, la gâchette 60 est équipée d'un bouton de sécurité 62 permettant, lorsqu'il est désactivé, d'autoriser l'actionnement de la gâchette 60. En comprimant la gâchette 60, on libère, par exemple par l'intermédiaire d'un ressort (non représenté), un pion (non représenté) plongé dans un logement (non représenté) prévu à cet effet dans la poutre principale 1. Dans ce cas (déverrouillage des moyens de verrouillage), l'utilisateur peut faire coulisser la poutre principale 1 le long de la structure rigide 2, de sorte que si l'utilisateur tire sur la poutre principale 1, alors les bras de la poussette se déplient, en revanche, si l'utilisateur pousse la poutre principale 1 vers le bas, alors les bras de la poussette se plient.

De façon que la poutre principale 1 suive le décalage dû à la compression du ressort 43 (en position dépliée), les moyens de verrouillage (qui sont activés, dans ce cas) doivent bien sûr coulisser légèrement le long de la poutre principale 1. On a ainsi prévu une fente (non représentée), dans la poutre principale 1. Avantageusement, cette fente s'étend dans la longueur de la poutre et permet la circulation des moyens de verrouillage à l'intérieur de la poutre 1.

Dans une variante de l'invention, la poutre principale 1 peut être équipée de moyens de rappel, par exemple un ou plusieurs ressorts de torsion, tendant à ramener le guidon 50 contre l'extrémité supérieure 21 de la structure rigide 2. Dans ce cas, l'utilisateur peut plier la poussette d'une main, simplement en appuyant sur la gâchette et en soulevant légèrement cette dernière. Ainsi, une telle poussette selon l'invention, est particulièrement bien adaptée pour les mères de familles aux bras encombrés de courses ou portant leur enfant d'un seul bras.

En référence aux **figures 1** et **2,** le mécanisme d'entraînement des biellettes peut prendre trois positions : une position passive **(figure 1),** dans laquelle le ressort 43 est détendu (l'extrémité supérieure du ressort est libre) et les premier 41 et second 42 éléments d'articulation sont éloignés l'un de l'autre, une position intermédiaire **(figure 2),** dans laquelle l'extrémité supérieure du ressort 43 vient en butée contre l'extrémité inférieure 22 de la structure rigide 2 et les premier 41 et second 42 éléments d'articulation sont en contact l'un contre l'autre, et une position active (non représenté), dans laquelle le ressort 43 est comprimé et les premier 41 et second 42 éléments d'articulation sont éloignés l'un de l'autre. Cet éloignement du premier et du second éléments d'articulation en cas de compression du ressort de suspension est un aspect important de la mise en oeuvre de l'invention.

En résumé, l'invention propose une nouvelle approche de l'entraînement des biellettes, selon laquelle au moins certaines biellettes sont solidaires d'une pièce coulissante, et non fixe. Cela permet notamment la mise en oeuvre d'un ressort de suspension.

Ce ressort de suspension agit sur les pièces coulissantes de façon à les solidariser le long d'une poutre principale. Cette cinématique permet donc d'effectuer très aisément le pliage et le dépliage, simplement en actionnant la poutre principale.

Ce ressort de suspension assure notamment une fonction de suspension centrale.

Bien entendu, des variantes de l'invention peuvent être envisagées, notamment sur les modes de réalisation et de mise en oeuvre de la suspension centrale. Notamment le ressort 43 peut être remplacé par un autre type de ressort et/ou tout autre moyen élastique adapté. On peut également prévoir d'associer deux (ou plus) ressorts voisins l'un de l'autre. On peut en outre prévoir l'utilisation d'un ressort présentant éventuellement sur sa longueur deux raideurs différentes. On peut aussi prévoir des moyens de réglage permettant d'agir et de contrôler la dureté de la suspension par exemple en deux positions prédéfinies, en agissant sur le débattement du ressort 43. Il peut par exemple s'agir d'une came (ou d'un tout autre élément d'épaisseur variable) comprimant plus ou moins le ressort, et que l'on règle à l'aide d'une bague.

Selon encore une autre variante, les quatre biellettes peuvent être montées solidaires sur l'élément coulissant.

On note que la technique selon l'invention peut de façon similaire être appliquée dans le cas d'une poussette à trois roues. Dans ce cas, les trois biellettes peuvent être montées solidaires sur l'élément coulissant ou la biellette du bras avant peut être montée solidaire d'un élément distinct, fixé sur la poutre principale.

Par ailleurs, il est possible d'augmenter la compacité de la poussette en position pliée, en jouant sur la hauteur de l'ensemble.

Ainsi on peut prévoir une articulation formée sur la poutre, permettant de replier la partie supérieure, portant le guidon, par exemple vers le hamac.

Comme déjà indiqué, l'invention peut également mettre en oeuvre un châssis dont la poutre principale est repliable. Selon un mode de réalisation, celle-ci est coulissante.

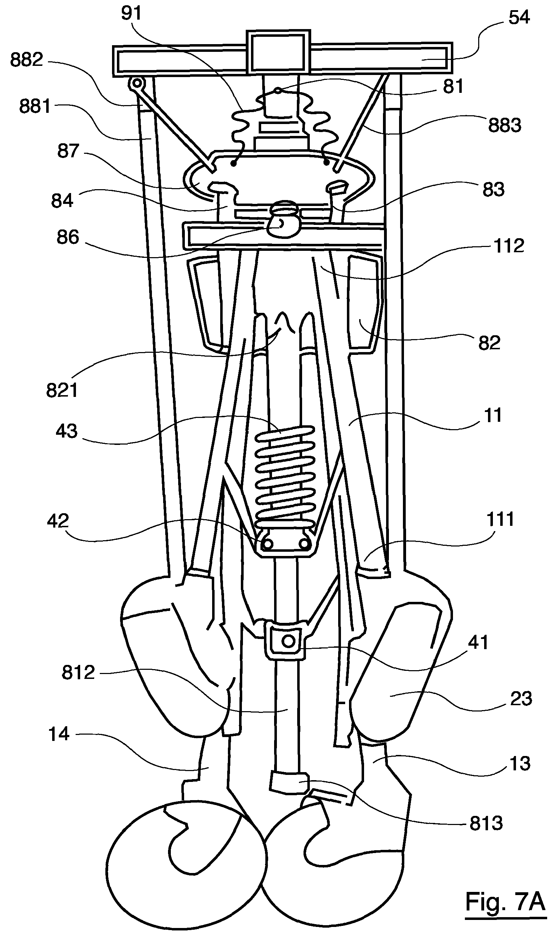

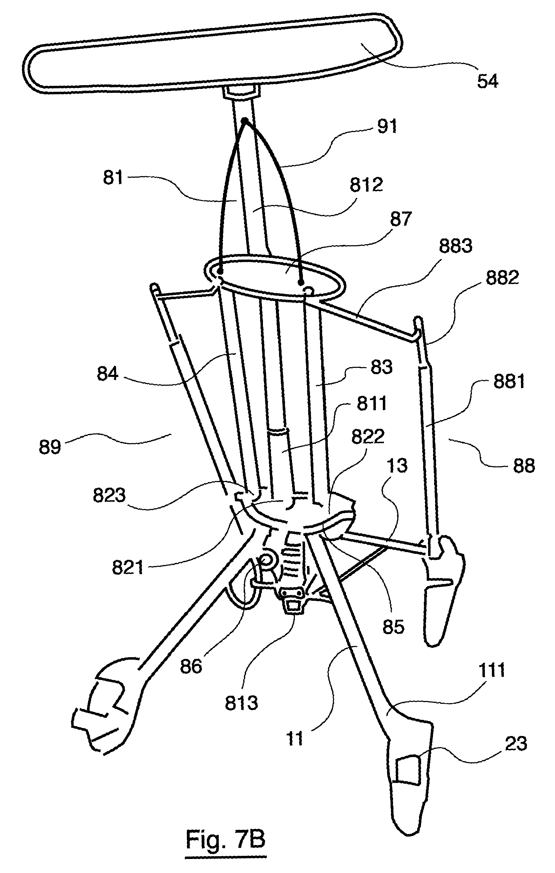

Les figures 7A et 7B présentent un exemple de châssis pliant d'une telle poussette, respectivement en position pliée et dépliée.

Comme illustré sur ces figures, le châssis comporte une poutre principale 81, sur laquelle est montée coulissante une structure d'articulation 82, par exemple en matière plastique, destinée notamment à recevoir deux bras avant 13 et 14 et deux bras arrière 11 et 12.

Une roue 23 (ou un bloc de roue) est montée à l'extrémité inférieure 111 de chaque bras. L'extrémité supérieure 112 de chaque bras vient partiellement se loger, pour y être solidarisée, mobile en rotation, dans une chambre (non représentée) prévue à cet effet dans la structure d'articulation 82.

Selon le présent mode de réalisation de l'invention, la poutre principale 81 est formée de deux tubes 811 et 812 coulissants l'un par rapport à l'autre. Le premier tube 811 présente un rayon légèrement supérieur à celui du second tube 812, de façon à permettre un glissement du type « tube dans tube ».

Le premier tube 811 porte, au voisinage de son extrémité inférieure, un mécanisme à biellettes, tel que décrit précédemment en relation avec les figures 1 et 2. On rappelle que ce mécanisme comprend des premier 41 et second 42 éléments d'articulation distincts sur lesquels sont montées respectivement des biellettes avant 33 et 34 et arrière 31 et 32. Ce mécanisme comprend en outre un ressort de suspension 43 assurant la fonction de suspension centrale. Le second élément d'articulation 42 et le ressort 43 sont montés coulissant le long du premier tube 811.

Le second tube 812, de longueur sensiblement plus grande que le premier tube 811, est équipé, à son extrémité supérieure, d'un guidon 54 ajustable en inclinaison.

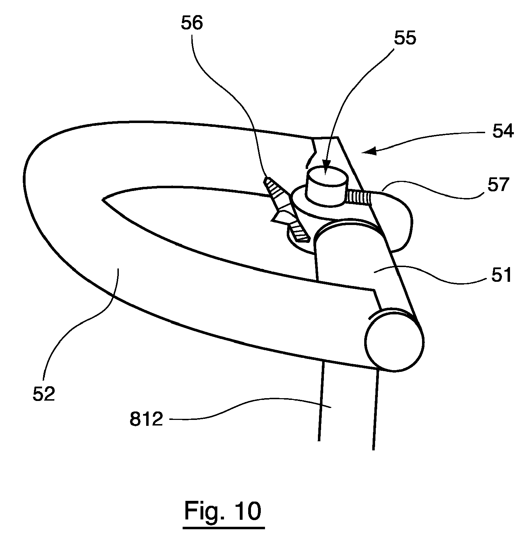

En référence à la **figure 10,** le guidon est avantageusement équipé d'une patte 57 de contrôle de l'inclinaison du bras poussoir 52. En actionnant la patte 57 de contrôle, on libère la rotation de la barre 51.

Dans le mode de réalisation illustré, le guidon 54 est équipé d'un bouton 55 permettant de commander des moyens de verrouillage (non représentés) de la poutre principale 81, par rapport à la structure d'articulation 82. Avantageusement, le guidon 54 est équipé d'un papillon de sécurité 56 permettant, lorsqu'il est désactivé, d'autoriser l'actionnement du bouton 55. En appuyant sur le bouton 55, on libère, par exemple par l'intermédiaire d'une tringle (non représentée), un pion de verrouillage (non représenté) logé dans un logement prévu à cet effet dans la structure d'articulation 82.

Ce tube 812 porte, à son extrémité inférieure, un bouchon 813, par exemple en matière plastique, prévu pour venir s'engager dans l'extrémité inférieure du premier tube 811. Ainsi, ce bouchon 813 permet d'obturer l'ouverture, présente à l'extrémité inférieure du premier tube 811, de façon à empêcher la poussière de pénétrer dans celui-ci, ce qui peut gêner le coulissement du second tube 812 dans le premier tube 811.

La structure d'articulation 82 de l'invention permet un coulissement de la poutre principale 81 dans celle-ci. Cette structure comporte donc, au voisinage de son centre, un logement ou tunnel 821 par lequel coulisse le premier tube 811 coulissant. Ce tunnel 821 est de forme circulaire et présente un rayon légèrement supérieur à celui du premier tube 811. Le glissement du premier tube 811 dans ce tunnel 821 cause donc peu de frottements.

Le support de hamac repliable est également adapté.

Selon l'invention, la structure rigide 2 (figures 1 et 2) en matière plastique est remplacée par deux brancards coulissants 83 et 84, réalisés en profilé métallique, par exemple en profilé d'aluminium.

Les brancards 83 et 84 sont disposés de part et d'autre de la poutre principale 81 et s'étendent sensiblement parallèlement à celle-ci, aussi bien dans la position pliée (figure 7A) que dans la position dépliée (figure 7B). Ces brancards 83 et 84 sont prévus pour être montés coulissants le long de la structure d'articulation 82.

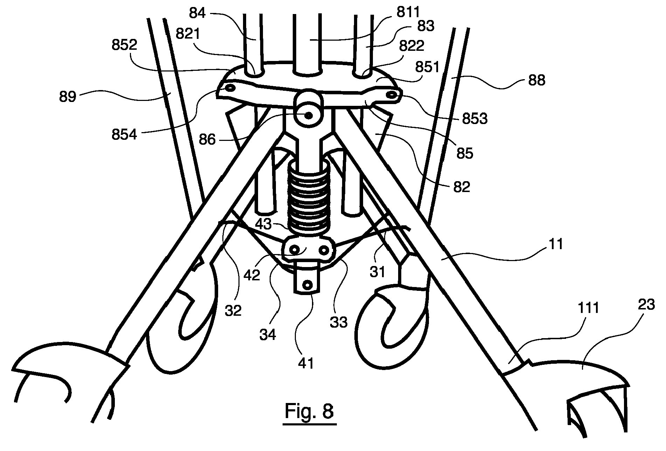

Comme illustré par la figure 8, la structure d'articulation 82 comprend, de chaque côté, un rail 822, en forme générale de « C », dans lequel vient s'engager un des brancards 83, pour y être guidé en coulissement. Ainsi, chaque brancard coulisse contre une portion de la structure d'articulation 82 ayant un rayon sensiblement supérieur à celui du brancard. Les faibles dimensions des surfaces en contact entraînent là encore un faible frottement.

Selon un aspect particulier de l'invention, le châssis comprend un arc 85, dont le profil épouse sensiblement celui de la partie supérieure de la structure d'articulation 82 (c'est-à-dire la partie située au niveau des rails de guidage).

L'arc 85 est conçu et monté sur la structure d'articulation 82 de façon à définir des logements 851 et 852, dans lesquels circulent les brancards 83 et 84. En d'autres termes, chacun de ces logements est défini par l'espace formé entre une extrémité de l'arc 85 et un rail 822 de la structure d'articulation 82. L'arc 85 présente de chaque côté des excroissances 853 et 854 permettant de réaliser des assemblages par vissage sur la structure d'articulation 82. De façon avantageuse, les extrémités de l'arc ne sont pas en contact avec les brancards. La présence de cet arc permet donc de maintenir efficacement les brancards dans leurs rails respectifs, sans gêner le glissement des brancards.

L'arc 85 est, avantageusement, réalisé en profilé métallique, par exemple en profilé d'aluminium, et son profil peut être obtenu, par exemple, à la suite d'opérations de pliage.

Dans un mode de réalisation préférentiel de l'invention, l'arc 85 est équipé d'une poignée 86, permettant de contrôler le déplacement de la structure d'articulation 82 le long de la poutre principale 81 et des brancards. Comme on le verra par la suite, une telle poignée 86 permet d'améliorer l'ergonomie et de simplifier les manipulations nécessaires au pliage/dépliage de la poussette.

Selon le présent mode de réalisation de l'invention, l'extrémité inférieure de chaque brancard 83 et 84 est libre. Les extrémités supérieures sont liées, l'une à l'autre, par une pièce charnière 87, par exemple en matière plastique.

Il est cependant important que les extrémités supérieures des brancards soient solidement maintenues. La pièce charnière 87 possède pour cela des ouvertures 871 et 872 de forme complémentaire à celle des brancards 83 et 84. Ainsi, un assemblage par insertion à force, vissage ou collage, peut être réalisé au niveau de ces ouvertures, sans gêner le coulissement des brancards dans la structure d'articulation 82. En d'autres termes, la pièce charnière 87 vient simplement s'encapsuler sur les extrémités supérieures des brancards.

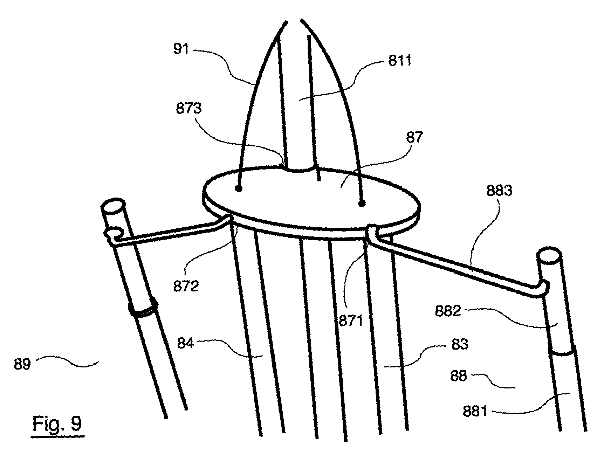

Comme cela apparaît sur la figure 9, la pièce charnière 87 comporte en outre, au voisinage de son centre, un logement ou tunnel 873 dans lequel coulisse la poutre principale 81. Ce tunnel 873 est de forme circulaire et présente un rayon légèrement supérieur à celui du premier tube. Le glissement des premier 811 et second 812 tubes dans ce tunnel cause donc peu de frottements.

Il est à noter que les ouvertures 871, 872 et 873 de la pièce charnière sont en regard direct avec celles 822, 823 et 821 de la structure d'articulation 82.

Le châssis selon l'invention comprend en outre un support latéral de hamac formé de deux longerons tubulaires 88 et 89, disposés de part et d'autre de la poutre principale 81.

Chaque longeron 88 est formé de deux tubes 881 et 882 coulissants l'un par rapport à l'autre. Le premier tube 881 présente un rayon légèrement supérieur à celui du second tube 882, de façon à permettre un glissement du type « tube dans tube ».

Selon le mode de réalisation illustré par la figure 7B, les extrémités inférieures des premiers tubes 881 sont montées articulées au voisinage des extrémités inférieures des bras avant 13, à l'aide, par exemple, de biellettes.

Les seconds tubes 882 sont prévus pour être solidarisés, au voisinage de leurs extrémités supérieures, à des biellettes 883. Ces dernières guident les seconds tubes, depuis une position pliée vers une position dépliée, et inversement.

Comme illustré par la figure 7A, dans la position pliée, les extrémités supérieures des seconds tubes 882 forment une longueur réduite par rapport aux extrémités supérieures des premiers tubes 881, et dans la position dépliée illustrée par la figure 7B, les extrémités supérieures des seconds tubes 882 forment une longueur supérieure à cette longueur réduite. Par ailleurs, on note que l'angle formé par une biellette 883 et un longeron 88 est plus grand en position dépliée qu'en position pliée. Ainsi, dans la position pliée, les longerons 88 se rapprochent de la poutre principale 81, et dans la position dépliée, les longerons 88 s'éloignent de la poutre principale 81.

En référence aux figures 7A et 7B, le mécanisme d'entraînement du support de hamac peut prendre deux positions : une position fermée (figure 7A), dans laquelle la structure d'articulation 82 et la pièce charnière 87 sont proches l'une de l'autre de sorte que les brancards 83 et 84 et la poutre principale 81 s'étendent principalement en dessous de la structure d'articulation 82, et une position ouverte (figure 7B), dans laquelle la structure d'articulation 82 et la pièce charnière 87 sont éloignées l'une de l'autre de sorte que les brancards 83 et 84 et la poutre principale 81 s'étendent principalement entre la structure d'articulation 82 et la pièce charnière 87.

Il est à noter que dans la position pliée, les extrémités inférieures des brancards 83 et 84 et de la poutre principale 81 restent au voisinage des extrémités inférieures des bras avant et arrière. Ces extrémités ne sont en contact, ni avec le sol, ni avec les roues avant. Les brancards et la poutre principale 81 n'interférent donc pas avec les points d'appui (au sol) formés par les roues avant. En d'autres termes, les brancards et la poutre principale 81 ne déséquilibrent pas la poussette en position debout. Au contraire, ils permettent d'abaisser le centre de gravité de la poussette. On obtient ainsi une meilleure stabilité de la poussette en position debout.

Pour plier la poussette selon l'invention, l'utilisateur doit, après avoir déverrouillé des verrouillages de sécurité (c'est-à-dire tourner le papillon de sécurité 56 et appuyer sur le bouton 55), pousser sur le guidon 54 de façon à rapprocher la pièce charnière 87 et la structure d'articulation 82.

Lors de l'opération de pliage, les biellettes 883 se déplacent d'une position sensiblement perpendiculaire aux longerons 88, vers une position dans laquelle elles présentent un angle faible avec ces longerons. Ce déplacement entraîne le rapprochement des longerons 88 vers la poutre principale 81, par pivotement autour de la pièce charnière 87.

En position repliée, la poussette présente donc les longerons 88 ramenés contre les brancards 83 et 84, les brancards et les bras rapprochés, et la poutre principale 81 enfoncée dans la structure d'articulation 82. Elle est donc particulièrement compacte.

Selon un autre mode de réalisation, la poutre principale peut présenter une articulation, permettant de la replier sur elle-même.

Il est à noter que cette approche permet de définir deux niveaux de pliage: un premier pliage simple et rapide, dans lequel les piétements sont ramenés le long de la poutre, celle-ci restant dépliée, et un pliage plus compact, supposant l'opération supplémentaire de repliage de la poutre.

Selon une variante de l'invention, la structure d'articulation 82 et l'arc 85 peuvent former une pièce unique, appelée pièce de liaison dans la suite de la description. Selon cette variante, l'invention met en oeuvre un châssis dont le hamac est plié/déplié à l'aide de câbles métalliques. Ces derniers entraînent le coulissement de la pièce charnière 87 par rapport à la pièce de liaison.

Les **figures 11A** et **11B** présentent un exemple de châssis pliant d'une telle poussette, respectivement en position pliée et dépliée.

Comme illustré sur ces figures, la pièce charnière 87 est montée articulée au voisinage de l'extrémité supérieure du second tube 812, à l'aide de câbles métalliques 91. Ces derniers guident la pièce charnière 87, depuis une position pliée vers une position dépliée, et inversement.

Ainsi, lorsque l'utilisateur tire sur le guidon 54, la pièce charnière 87 s'éloigne de la pièce de liaison 94 et les brancards 83 et 84 se déplient, en revanche, lorsque l'utilisateur pousse le guidon 54 vers le bas, la pièce charnière 87 se rapproche de la pièce de liaison 94 et les brancards 83 et 84 se plient.

Comme déjà indiqué, les commandes du dispositif de verrouillage du châssis (tels que décrits avec la figure 10) sont déportés au niveau du guidon. Selon le présent mode de réalisation de l'invention, le dispositif de verrouillage 93 permet, lorsqu'il est activé, de positionner un pion de camping 931 dans un logement 932 formé dans la pièce de liaison 94. Dans ce cas, le pion de camping lie le second tube 812 à la pièce de liaison 94, de façon à empêcher le pliage du hamac.

Dans ce mode de réalisation, on prévoit une commande du bouchon d'obturation 813, basée sur l'utilisation d'un câble métallique 92, monté suspendu à l'extrémité inférieure du second tube 812. Comme cela apparaît sur la figure 11B, le câble métallique 92 permet, en position dépliée, d'augmenter la longueur effective du second tube 812, de façon à placer davantage en hauteur le guidon pour un meilleur confort d'utilisation. On obtient ainsi un mécanisme d'entraînement du bouchon d'obturation simple, efficace et surtout peu encombrant. En effet, ce mécanisme permet de réduire la longueur du second tube 812, de sorte qu'en position pliée, le second tube n'interfère pas avec les points d'appui (au sol) formés par les roues avant. En d'autres termes, le second tube ne touche pas le sol et ne déséquilibre pas la poussette.

## Revendications

1. Poussette pour enfant comprenant au moins trois blocs (23, 24, 25, 26) d'au moins une roue, montés chacun à une première extrémité (111, 121, 131, 141) d'un bras (11, 12, 13, 14) dont la seconde extrémité (112, 122, 132, 142) est montée articulée et coulissante le long d'une poutre principale (1),
lesdits bras (11, 12, 13, 14) étant guidés par au moins une biellette (31, 32, 33, 34) entre une position pliée, dans laquelle ils forment un angle réduit avec ladite poutre (1), et une position dépliée, dans laquelle lesdits bras (11, 12, 13, 14) forment un angle supérieur audit angle réduit,
**caractérisé en ce qu'**elle comprend au moins un élément coulissant (42) monté sur ladite poutre (1), auquel est solidarisée au moins une desdites biellettes (31, 32), et des moyens de suspension (43), solidaires de ladite poutre (1) et agissant sur au moins un desdits éléments coulissants (42).

2. Poussette selon la revendication 1, **caractérisée en ce que** lesdits moyens de suspension (43) comprennent un ressort à boudin monté sur ladite poutre principale.

3. Poussette selon la revendication 2, **caractérisée en ce qu'**une première extrémité (431) dudit ressort à boudin est solidaire d'un desdits éléments coulissants (42).

4. Poussette selon l'une quelconque des revendications 2 et 3, **caractérisée en ce qu'**une seconde extrémité (432) dudit ressort à boudin est libre.

5. Poussette selon l'une quelconque des revendications 1 à 4, **caractérisée en ce qu'**au moins une première desdites biellettes (31, 32) est solidaire d'un élément coulissant (42) et au moins une seconde desdites biellettes (33, 34) est solidaire d'une pièce (41) fixe montée à l'extrémité inférieure de ladite poutre (1).

6. Poussette selon la revendication 5, **caractérisée en ce que** chaque biellette (31, 32) associée à une roue arrière est une première biellette et chaque biellette (33, 34) associée à une roue avant est une seconde biellette.

7. Poussette selon l'une quelconque des revendications 1 à 6, **caractérisée en ce qu'**elle comprend des moyens de verrouillage en position déployée, comprenant un doigt de verrouillage coopérant avec une ouverture ménagée dans ladite poutre.

8. Poussette selon la revendication 7, **caractérisée en ce que** ladite ouverture est une fente permettant un léger déplacement le long de ladite poutre.

9. Poussette selon l'une quelconque des revendications 1 à 8, **caractérisée en ce que** ladite poutre principale (81) est pliable, pour réduire son encombrement dans ladite position dépliée.

10. Poussette selon la revendication 9, **caractérisée en ce que** ladite poutre principale (81) est formée d'un premier élément (811) présentant des moyens de guidage en coulissement d'un second élément (812) correspondant dans ou au voisinage dudit premier élément.

11. Poussette selon les revendications 1 et 8, **caractérisée en ce qu'**elle comprend un support d'assise formant liaison entre lesdits premiers moyens de verrouillage et un support coulissant desdits bras.

12. Poussette selon l'une quelconque des revendications 7 à 9, **caractérisée en ce qu'**elle comprend des moyens de commande (60) desdits premiers moyens de verrouillage, montés sur ladite poutre.

13. Poussette selon les revendications 10 et 11, **caractérisée en ce que** ledit support d'assise est formé de deux éléments (83, 84) montés articulés sur ledit support coulissant de façon que, lorsqu'ils s'étendent en dessous dudit support coulissant, ils s'opposent à l'ouverture d'un hamac.

14. Poussette selon l'une quelconque des revendications 1 à 12, **caractérisée en ce qu'**elle comprend un support de hamac formé de deux longerons (88, 89) formés chacun de deux tubes coulissants (881, 882) l'un dans ou par rapport à l'autre.

15. Poussette selon la revendication 13, **caractérisée en ce qu'**au moins un desdits tubes coulissants (882) est guidé en coulissement par une biellette (883).

16. Poussette selon l'une quelconque des revendications 1 à 15, **caractérisée en ce qu'**elle comprend un repose-pied (7) formé de deux palettes (71, 72) articulées.

17. Poussette selon la revendication 16, **caractérisée en ce que** le déploiement et/ou le repli dudit repose-pieds (7) est contrôlé par au moins un câble (44) et/ou au moins une biellette.

18. Poussette selon l'une quelconque des revendications 16 et 17, **caractérisée en ce qu'**au moins une desdites palettes (71, 72) porte au moins un élément d'appui (73, 74), permettant le maintien en position debout de ladite poussette, en position pliée.

19. Poussette selon la revendication 18, **caractérisée en ce que** chacune desdites palettes (71, 72) porte un élément d'appui (73, 74), ces éléments d'appui étant montés de façon que, lorsqu'ils sont en appui contre le sol, ils s'opposent au déploiement de la poussette.

20. Poussette selon l'une quelconque des revendications 1 à 19, **caractérisée en ce que** ladite poutre principale (1) porte, à son extrémité supérieure, des moyens de guidage (50) de ladite poussette, articulés par rapport à ladite poutre principale.

21. Poussette selon la revendication 20, **caractérisée en ce que** lesdits moyens de guidage (50) comprennent des deuxièmes moyens de verrouillage montés articulés sur ladite poutre principale de façon que, dans une position déverrouillée, ils autorisent la rotation desdits moyens de guidage autour d'un axe perpendiculaire à ladite poutre principale.

22. Poussette selon l'une quelconque des revendications 20 et 21, **caractérisée en ce que** lesdits moyens de guidage (50) comprennent des troisièmes moyens de verrouillage mettant en oeuvre un mécanisme de crabot dont une partie est solidaire de ladite poutre principale et une autre partie est solidaire desdits moyens de guidage.

23. Poussette selon les revendications 21 et 22, **caractérisé en ce que** lesdits troisièmes moyens de verrouillage coopèrent avec lesdits deuxièmes moyens de verrouillage pour immobiliser lesdits moyens de guidage par rapport à ladite poutre principale.

24. Châssis de poussette pour enfant comprenant au moins trois blocs (23, 24, 25, 26) d'au moins une roue, montés chacun à une première extrémité (111, 121, 131, 141) d'un bras (11, 12, 13, 14) dont la seconde extrémité (112, 122, 132, 142) est montée articulée et coulissante le long d'une poutre principale (1),
lesdits bras (11, 12, 13, 14) étant guidés par au moins une biellette (31, 32, 33, 34) entre une position pliée, dans laquelle ils forment un angle réduit avec ladite poutre (1), et une position dépliée, dans laquelle lesdits bras (11, 12, 13, 14) forment un angle supérieur audit angle réduit,
**caractérisé en ce qu'**elle comprend au moins un élément coulissant (42) monté sur ladite poutre (1), auquel est solidarisée au moins une desdites biellettes (31, 32), et des moyens de suspension (43), solidaires de ladite poutre (1) et agissant sur au moins un desdits éléments coulissants (42).
